(19) **Europäisches Patentamt / European Patent Office / Office européen des brevets**

(11) **EP 1 184 125 B1**

(12) **EUROPEAN PATENT SPECIFICATION**

(45) Date of publication and mention
of the grant of the patent:
**11.07.2012 Bulletin 2012/28**

(51) Int Cl.:
**B23K 20/02** *(2006.01)*

(21) Application number: **01830465.9**

(22) Date of filing: **12.07.2001**

(54) **Method of diffusion bonding thin foils made of metal alloys selectively permeable to hydrogen, particularly providing membrane devices, and apparatus for carrying out the same**

Verfahren zum Diffusionsschweissen von dünnen Folien, hergestellt aus metallischen wasserstoffdurchlässigen Legierungen, insbesondere zur Herstellung von Membranvorrichtungen, und Vorrichtung zur Durchführung des Verfahrens

Méthode de soudage par diffusion de feuilles fines perméables à l'hydrogène, en particulier pour des appareils à membrane, et appareil pour la mise en oeuvre du procédé

(84) Designated Contracting States:
**AT BE CH CY DE DK ES FI FR GB GR IE IT LI LU MC NL PT SE TR**

(30) Priority: **25.07.2000 IT RM20000412**

(43) Date of publication of application:
**06.03.2002 Bulletin 2002/10**

(73) Proprietor: **ENEA - Ente per le Nuove Tecnologie, l'Energia e l'Ambiente**
**00196 Roma (IT)**

(72) Inventors:
- **Tosti, Silvano**
  **I-00044 Frascati(Roma) (IT)**
- **Bettinali, Livio**
  **I-00046 Grottaferrata(Roma) (IT)**
- **Lecci, Domenico**
  **I-00040 Roma (IT)**
- **Violante, Vittorio**
  **I-00191 Roma (IT)**
- **Marini, Fabrizio**
  **I-00044 Frascati(Roma) (IT)**

(74) Representative: **Sarpi, Maurizio**
**Studio Ferrario S.r.l.**
**Via Collina, 36**
**00187 Roma (IT)**

(56) References cited:
**US-A- 4 013 210      US-A- 4 699 637**
**US-A- 5 904 754**

- **DUNKERTON S B: "DIFFUSION BONDING-PROCESS AND APPLICATIONS" WELDING AND METAL FABRICATION, IPC LTD. HAYWARDS HEATH, GB, vol. 59, no. 3, 1 April 1991 (1991-04-01), pages 132,134-136, XP000215737 ISSN: 0043-2245**
- **TOSTI S ET AL: "Rolled thin Pd and Pd-Ag membranes for hydrogen separation and production" INTERNATIONAL JOURNAL OF HYDROGEN ENERGY, ELSEVIER SCIENCE PUBLISHERS B.V., BARKING, GB, vol. 25, no. 4, April 2000 (2000-04), pages 319-325, XP004185494 ISSN: 0360-3199**

## Description

The present invention relates to the industrial field relative to the production of ultra-pure hydrogen.

To separate and produce ultra-pure hydrogen tubes of palladium alloy selectively permeable to hydrogen with a thickness of 100-150 $\mu$m are presently manufactured and marketed.

Such permeable tubes are used in separation processes operating under high pressures greater than 1 MPa (10 atm) and at temperatures higher than 400°C.

In recent times, devices including a catalytic reactor and permeable membrane means, so-called catalytic membrane reactor, have been developed and applied to the production of hydrogen in molecular reforming reactions. Such devices are used in novel processes having some advantages including:

- reaching high reaction conversion rates (over the thermodynamic equilibrium);
- reduction in the number of apparatus as well as in the cost with the result of an increase in the reliability of the installation.

In particular, the use of such devices (catalytic membrane reactors) in molecular reforming processes operating under low pressure (lower than 1 MPa), such as the water shift reaction or methane or methanol reforming, achieves further advantages if permeable tubes with very thin wall, i.e. with a thickness lower than 100 $\mu$m, are used.

It should be noted that, if any other condition remains unchanged, the reduction in the thickness involves an increase in the permeating hydrogen flux and the reaction conversions (yields) too.

To this purpose the Applicant has developed a technology for producing permeable tubes of palladium-silver alloy (Ag 25% by weight) having a thickness lower than 50 $\mu$m. Such tubes find application in the manufacturing of catalytic membrane reactors used in processes operating at low pressure (lower than 1 MPa) and temperatures up to 450°C.

"Tosti et al : thin Pd and Pd-Ag membranes for hydrogen separation and production. Internal journal of hydrogen energy, Elsevier sciences Publishers, April 2000, pages 319-325" discloses a diffusion welding procedure for joining thin foils of metal alloys selectively permeable to hydrogen.

The technology developed for the manufacturing of permeable Pd-Ag tubes with thin wall provides the rolling of metal foils up to a thickness lower than 50 $\mu$m and the following joining of the metal foil edges which are overlapped along a generatrix of the tube which is being formed.

In particular, the rolling mill process consists of a number of metal foil rolling and annealing operations in order to control the work-hardening of the material, however, the autogenous welding or brazing techniques used until today cause penetration of metal impurities contaminating and altering the palladium-silver alloy.

By the way, it should be appreciated that the lack of defects and the purity of the Pd-Ag alloy are essential requirements to provide the selectivity of the permeable tube (production of ultra-pure hydrogen) and high permeability factors (high hydrogen flux).

A disadvantage of the presently used welding processes, such as autogenous welding (argon arc welding, TIG) made along the generatrix of the tube with thin wall, is due to the fact that the thermal and hydrogen loading cycles cause a brittleness with the result of producing microcracks in the welding area which cause the membrane not to be selective to hydrogen any longer.

Such a diffusion bonding technique is disclosed in "Dunkerton s.b.: diffusion bonding-process and applications. Welding and metal Fabrication, April 1991, pages 132, 134-136", according to the preamble of claim 1 and of claim 9.

The invention seeks to overcome such problems by providing a bonding that do not cause tension or hardening which can cause in turn the brittleness mentioned above. This is accomplished according to the invention by providing a bonding method using a hot diffusion bonding technique.

A better understanding of the invention will result from the following detailed description with reference to the accompanying drawings that show some preferred embodiments thereof only by way of a not limiting example.

In the drawings:

Figure 1 shows schematically the essential components of the bonding apparatus upon joining two flat foils placed side by side;

Figure 2 similar to the preceding figure relates to the joining of a foil which is bent to form a tube;

Figures 3, 4 and 5 are the three partially sectioned orthogonal projections of the apparatus of Fig. 2, respectively;

Figures 6 and 7 show a TIG welding seam on a tube of Pd-Ag with thin wall and the cracks which are formed along the same welding seam after thermal treatment and hydrogenation, respectively;

Figures 8 and 9 show a welding seam according to the present invention and a cross section of the same welding seam, respectively.

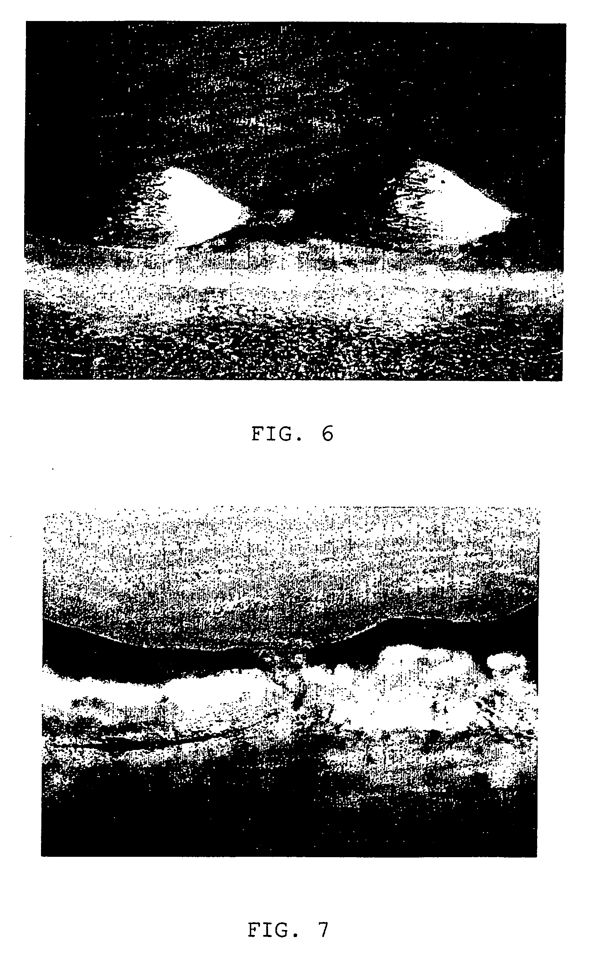

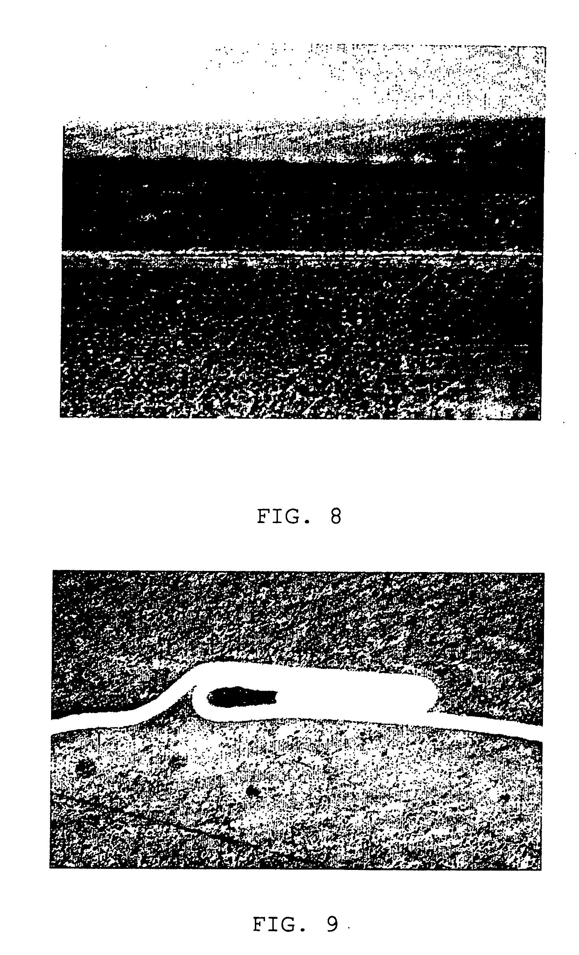

With reference to Figures 6 and 7, it is self-evident that in case of TIG welding of tubes with thin wall made of Pd-Ag alloy, thermal treatments and hydrogenation cause cracks along the welding seam, while in case of a diffusion bonding according to the invention (Figs. 8 and 9) the welding seam is quite uniform so that no tension or hardening that would cause strains and cracks are provided.

According to the invention, the diffusion bonding for joining thin foils made of metal alloys permeable to hydrogen, such as Pd-Ag alloy, mainly occurs because of a hot diffusion of the silver in the alloy.

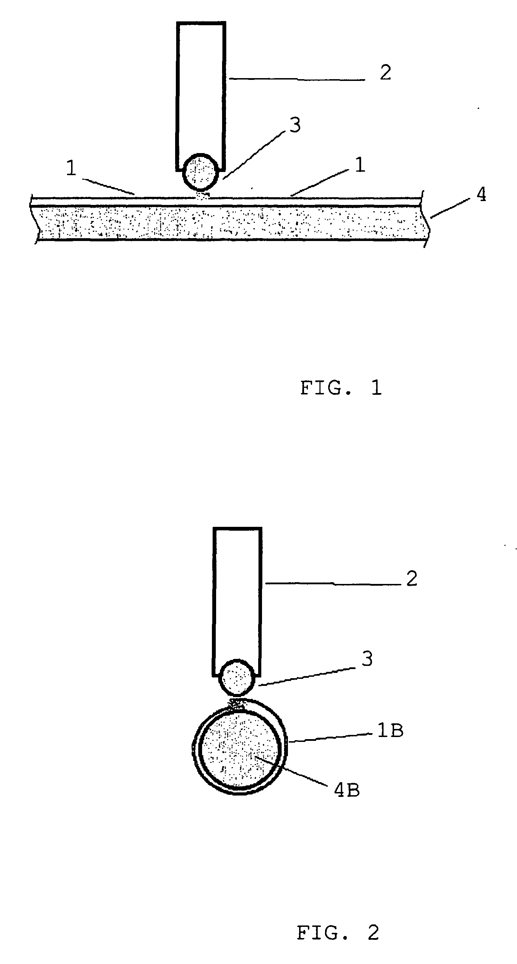

In particular, the thin membrane permeable to hydrogen can be joined in the flat state (Fig. 1) or in the bent state to form permeable tubes (Fig. 2).

The described embodiments relates to thin foils permeable to hydrogen which are preferably made of a palladium-silver (Pd-Ag) alloy.

As described above, the thin foils made of an alloy formed by palladium and silver (25% by weight) are manufactured from thick metal sheets. Bands with suitable width and thickness lower than 50 $\mu$m are provided by cold-rolling such sheets. Upon rolling the material undergoes a work-hardening so that an annealing is necessary that is carried out under a partially reducing atmosphere (mixture of Ar and 5% H) in order to avoid the oxidation of the alloy, with a thermal cycle which reaches and keeps the temperature of 1200°C for 1 hour.

Such thin foils are then cut to measure by providing also a side margin sufficient to allow the edges to be overlapped in the area of the diffusion bonding (for example 1-2 mm).

Figure 1 shows schematically the diffusion bonding apparatus for flat thin foils according to the invention.

In this case, both foils 1 are laid down on a flat rigid support plate 4, preferably of alumina, so that their edges to be joined are overlapped and positioned under a pressure blade 2 having a circular edge 3, preferably also of alumina, which is straight and parallel to flat plate 4 on which foils 1 lie.

Pressure blade 2 evenly presses the overlapped edges of the foils to be joined by its lower circular edge.

The pressure can be adjusted, for example, by set screws preferably located at the upper portion of the device.

According to the present invention, the diffusion bonding is carried out in an oven under controlled atmosphere preferably with a flow rate of 1 litre/min of a mixture of argon (Ar) and 5% hydrogen (H) at the pressure of 1 atm according to the following thermal cycle:

- heating rate of 6°C/min up to 720°C;
- heating rate of 12°C/min up to 1100°C;
- keeping 1100°C for 1 hour;
- natural cooling down to room temperature for about three hours.

As better explained hereafter, the diffusion bonding of the overlapped edges of the foil made of Pd-Ag alloy is mainly due to the high mobility of the silver atoms in the metal alloy.

Should permeable tubes be manufactured, the size of each thin foil 1B is such as to cover the side surface of the tube, enough overlap for the welding being also provided (Fig. 2).

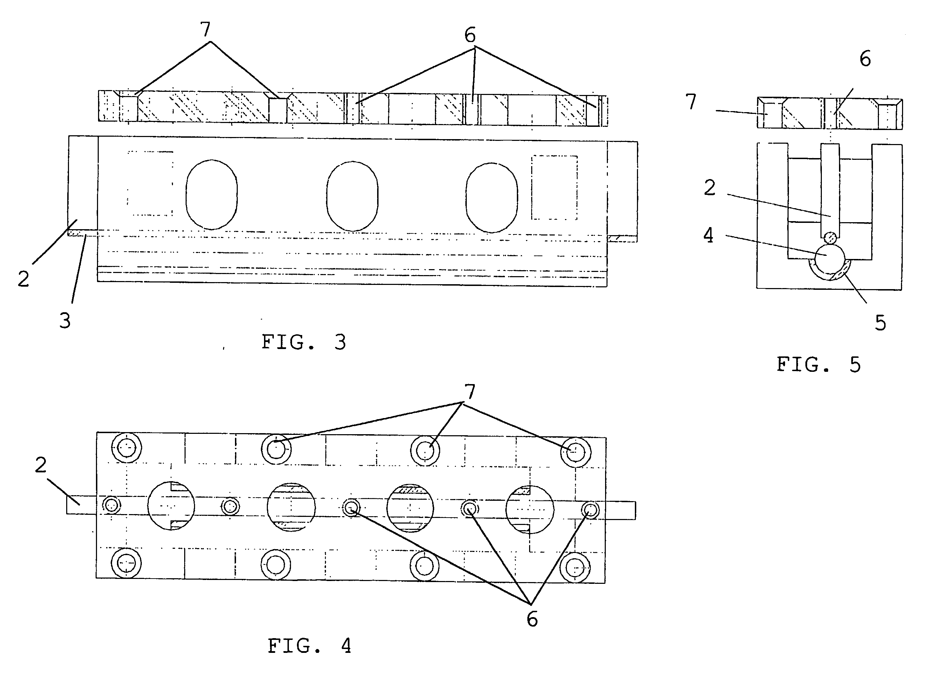

In particular, the tube to be joined is placed in the device shown in Figure 5 including:

- a steel blade 2 with a rounded edge 3 made of alumina;
- a cylinder 4B of alumina capable of supporting a tube 1B of palladium-silver with thin wall;
- an alumina bearing shell 5 having a shape conjugated to the surface of rounded edge 3;
- set screws 6 to adjust height and pressure of blade 2;
- screws for tightening cover 7.

The method of diffusion bonding tube 1B with thin wall is similar to that described above with reference to the junction of two flat foils 1.

Turning now to the phenomenon of diffusion bonding, it is interesting to note that the use of literature information [Handbook of Chemistry and Physics, CRC Press] for the self-diffusion coefficient of silver at the solid state in the temperature range 640-955°C gives:

$$D = D_o \, \exp(-E/RT) \qquad \mathrm{cm^2/s}$$

where:

Do = pre-exponential coefficient = 0.67 cm$^2$/s
E/R = activation energy = 22830 K
T = temperature, K

An analysis of the time necessary to the diffusion bonding of thin foils made of Pd-Ag alloy has been developed under the following assumptions:

- using the self-diffusion coefficient of silver instead of the diffusion coefficient of silver in Pd-Ag alloy;
- neglecting the dependence of the diffusion coefficient on the concentration of the solute;
- extrapolating the above formula also out of the temperature range mentioned in the literature;
- neglecting the mobility of the palladium atoms (the diffusion coefficient of palladium is about six orders of magnidude lower than silver).

The results of such analysis can be read in the following Table A showing that the temperature and the duration of the thermal cycle depend on the thickness of the thin foils to be joined.

In particular, the Table shows the length of the thermal treatment of foils with a thickness of 35 to 50 $\mu$m at different temperatures.

TABLE A

| T [°C] | Treatment length (hours) for foils with thickness: | |
| --- | --- | --- |
| | 35 $\mu$m | 50 $\mu$m |
| 800 | 8.81 | 17.97 |
| 900 | 1.44 | 2.93 |
| 1000 | 0.31 | 0.64 |
| 1100 | 0.08 | 0.17 |
| 1200 | 0.03 | 0.056 |

Advantageously, according to the invention, the permeable tubes manufactured by such bonding technique showed no defects in the junction (microholes and cracks), thus ensuring the total selectivity to hydrogen. In addition, such bonding technique does not change the composition of the palladium-silver alloy, thus ensuring high permeability and good resistance to brittleness (due to the thermal cycles and the hydrogen loading).
By the way, some applications in which such technology is particularly useful should be appreciated.
For example, applications of such permeable tubes to the ITER fuel cycle (recovery of tritium from tritiated water in catalytic membrane reactors for the water shift reaction) have been studied. In particular, the lack of defects guarantees the selectivity of such membranes, a requirement that cannot be disregarded in nuclear applications.
In the field of chemical, petrochemical industry the use of such permeable means is particularly interesting over other processes as the reduced thickness of the tubes allows cost to be decreased and permeation fluxes to be increased, while the total selectivity guarantees the production of ultra-pure gas. In this connection, the applications range from separation processes (production of hydrogen from gas mixtures) to the generation of hydrogen in catalytic membrane reactors with molecular reforming reactions. Furthermore, considering the recent developments in the production of ultra-pure hydrogen for fuel cells used in the electric vehicles, the present invention is particularly suitable also for automotive industry.

**Claims**

1. An apparatus for joining thin foils made of metal alloys selectively permeable to hydrogen, which is capable of carrying out a hot diffusion bonding in an oven under controlled temperature and includes in combination:

- rigid support means (4, 4B) able to keep the edges of the foil(s) (1, 1B) to be joined in the desired over lapping position
- a pressure blade (2) able to press evenly the edges of the foil(s) (1,1B) to be joined in order to weld them, all over their length;
- means for adjusting the pressure which is applied edges of the foil(s) (1,1B) to be joined in order to weld them, by pressure blade (2);

said pressure blade (2) is provided with a straight circular edge resting on the **characterized in that** and parallel to support means (4, 4B).

2. The apparatus of the preceding claim, **characterized in that** said support means (4, 4B) for the foil(s) (1, 1B) to be joined is made of alumina.

3. The apparatus of the preceding claims, **characterized in that** in order to join two flat foils (1), said support means for the foils is formed of a rigid flat plate (4).

4. The apparatus according to one of claims 1 or 2, **characterized in that** in order to form permeable tubes, said support means for the foil (1B) is formed of a rigid cylinder (4B).

5. The apparatus according to claim 4, **characterized in that** there is additionally provided a bearing shell (5) of alumina having a shape which is conjugated to support cylinder (4B).

6. The apparatus of the preceding claims, **characterized in that** the overlap of the edges to be joined is 1-2 mm, the foil(s) (1, 1B) to be joined having an additional margin of corresponding size.

7. The apparatus of the preceding claims, **characterized in that** the pressure exerted on the junction area by said pressure blade (2) is adjusted by set screws (6).

8. The apparatus of the preceding claims, **characterized in that** it is particularly suitable for joining thin foils made of palladium-silver alloy with a thickness lower than 50 $\mu$m.

9. A method of joining thin foils made of metal alloys selectively permeable to hydrogen, particularly for membrane devices, **characterized in that** a hot diffusion bonding technique is provided that includes the following steps:

overlapping the edges to be joined;
drawing the edges near each other and tightening them by a pressure blade (2) able to press evenly
the edges of the foil(s) (1,1B) to be joined in order to weld them, all over their length;
performing a thermal cycle in an oven under controlled atmosphere, for preventing any oxidation in the metal alloys and for preventing any changes in the composition of the alloys, according to the following thermal cycle;

heating rate of 6°C/min up to 720°C;
heating rate of 12°C/min up to 1100°C;
keeping 1100°C for 1 hour;
natural cooling down to room temperature for about three hours.

10. The method according to preceding claim, **characterized in that** said controlled atmosphere is formed by an argon and hydrogen flux.

11. The method according to preceding claim, **characterized in that** said flux has a flow rate of 1 litre/min of a mixture of argon (Ar) and 5% hydrogen (H) at the pressure of 1 atm.

12. The method according to anyone of claims 9 to 11, **characterized in that** said metal alloys selectively permeable to hydrogen include silver.

**Patentansprüche**

1. Vorrichtung zum Zusammenfügen dünner Folien aus Metall-Legierungen, die selektiv wasserstoffdurchlässig sind, wobei die Vorrichtung in der Lage ist, eine Diffusionsschweißung in einem Ofen bei einer kontrollierten Temperatur auszuführen, und in Kombination Folgendes enthält:

- ein starres Stützmittel (4, 4B), das in der Lage ist, die Ränder der einen oder der mehreren Folien (1, 1B), die zusammenzufügen sind, in der gewünschten überlappenden Position zu halten;

- eine Druckklinge (2), die in der Lage ist, die Ränder der einen oder der mehreren Folien (1, 1B), die zusammenzufügen sind, um sie zu verschweißen, über ihre gesamte Länge gleichmäßig zu pressen;
- ein Mittel zum Justieren des Drucks, der durch Druckklinge (2) ausgeübt wird;

**dadurch gekennzeichnet, dass**
die Druckklinge (2) mit einem geraden kreisförmigen Rand versehen ist, der auf den Rändern der einen oder der mehreren Folien (1, 1B), die zusammenzufügen sind, um sie zu verschweißen, ruht und parallel zu dem Stützmittel (4, 4B) verläuft.

2. Vorrichtung nach dem vorhergehenden Anspruch, **dadurch gekennzeichnet, dass** das Stützmittel (4, 4B) für die eine oder die mehreren Folien (1, 1B), die zusammenzufügen sind, aus Aluminiumoxid besteht.

3. Vorrichtung nach den vorhergehenden Ansprüchen, **dadurch gekennzeichnet, dass**, um zwei flache Folien (1) zusammenzufügen, das Stützmittel für die Folien aus einer starren flachen Platte (4) besteht.

4. Vorrichtung nach einem der Ansprüche 1 oder 2, **dadurch gekennzeichnet, dass**, um durchlässige Röhren zu bilden, das Stützmittel für die Folie (1B) aus einem starren Zylinder (4B) gebildet wird.

5. Vorrichtung nach Anspruch 4, **dadurch gekennzeichnet, dass** zusätzlich eine Lagerschale (10) aus Aluminiumoxid angeordnet ist, deren Form so konjugiert ist, dass sie den Zylinder (4B) stützt.

6. Vorrichtung nach den vorhergehenden Ansprüchen, **dadurch gekennzeichnet, dass** die Überlappung der Ränder, die zusammenzufügen sind, 1-2 mm beträgt, wobei die eine oder die mehreren Folien (1, 1B), die zusammenzufügen sind, einen Zusatzrand von entsprechender Größe aufweisen.

7. Vorrichtung nach den vorhergehenden Ansprüchen, **dadurch gekennzeichnet, dass** der Druck, der durch die Druckklinge (2) auf die Fügefläche ausgeübt wird, durch Stellschrauben (6) justiert wird.

8. Vorrichtung nach den vorhergehenden Ansprüchen, **dadurch gekennzeichnet, dass** sie insbesondere zum Zusammenfügen dünner Folien geeignet ist, die aus einer Palladium-Silber-Legierung mit einer Dicke von weniger als 50 $\mu$m bestehen.

9. Verfahren zum Zusammenfügen dünner Folien aus Metall-Legierungen, die selektiv wasserstoffdurchlässig sind, insbesondere für Membran-Bauelemente, **dadurch gekennzeichnet, dass** eine Diffusionsschweißtechnik bereitgestellt wird, welche die folgenden Schritte enthält:

- Überlappen der Ränder, die zusammenzufügen sind;
- Ziehen der Ränder nahe zueinander und Straffen der Ränder mittels einer Druckklinge (2), die in der Lage ist, die Ränder der einen oder der mehreren Folien (1, 1B), die zusammenzufügen sind, um sie zu verschweißen, über ihre gesamte Länge gleichmäßig zu pressen;
- Ausführen eines thermischen Zyklus in einem Ofen in einer kontrollierten Atmosphäre zum Verhindern von Oxidation in den Metall-Legierungen und zum Verhindern von Veränderungen in der Zusammensetzung der Legierungen, gemäß dem thermischen Zyklus;

• Erwärmungsrate von 6°C/min bis 720°C;
• Erwärmungsrate von 12°C/min bis 1100°C;
• 1 Stunde lang Halten auf 1100°C;
• etwa drei Stunden lang natürliche Abkühlung auf Raumtemperatur.

10. Verfahren nach dem vorhergehenden Anspruch, **dadurch gekennzeichnet, dass** die kontrollierte Atmosphäre durch einen Argon- und Wasserstofffluss gebildet wird.

11. Verfahren nach dem vorhergehenden Anspruch, **dadurch gekennzeichnet, dass** der Fluss eine Strömungsrate von 1 Liter/min eines Gemisches aus Argon (Ar) und 5 % Wasserstoff (H) bei einem Druck von 1 atm hat.

12. Verfahren nach einem der Ansprüche 9 bis 11, **dadurch gekennzeichnet, dass** die Metall-Legierungen, die selektiv wasserstoffdurchlässig sind, Silber enthalten.

**Revendications**

1. Dispositif pour joindre des feuilles fines constituées d'alliages métalliques sélectivement perméables à l'hydrogène, qui est apte à effectuer un soudage par diffusion à chaud dans un four sous une température contrôlée et qui comprend en combinaison :

   - un moyen de support rigide (4, 4B) capable de conserver les bords de la/des feuille(s) (1, 1B) à joindre dans la position de recouvrement désirée ;
   - une lame de pression (2) capable de presser uniformément les bords de la/des feuille(s) (1, 1B) à joindre afin de les souder, sur toute leur longueur ;
   - un moyen pour ajuster la pression qui est appliquée par la lame de pression (2) ;

   **caractérisé en ce que**
   ladite lame de pression (2) est dotée d'un bord circulaire droit s'appliquant sur les bords de la/des feuille(s) (1, 1B) à joindre afin de les souder, et parallèle au moyen de support (4, 4B).

2. Dispositif selon la revendication précédente, **caractérisé en ce que** ledit moyen de support (4, 4B) pour la/les feuilles (1, 1B) à joindre est constitué d'alumine.

3. Dispositif selon les revendications précédentes, **caractérisé en ce que** ledit moyen de support pour les feuilles est formé par une plaque plate rigide (4) afin de joindre deux feuilles plates (1).

4. Dispositif selon l'une quelconque des revendications 1 ou 2, **caractérisé en ce que** ledit moyen de support pour la feuille (1B) est formé par un cylindre rigide (4B) afin de former des tubes perméables.

5. Dispositif selon la revendication 4, **caractérisé en ce qu'**il est en plus prévu un coussinet de support (5) en alumine présentant une forme conjuguée au cylindre de support (4B).

6. Dispositif selon les revendications précédentes, **caractérisé en ce que** le recouvrement des bords à joindre est de 1 à 2 mm, la/les feuille(s) (1, 1B) à joindre présentant une marge additionnelle de grandeur correspondante.

7. Dispositif selon les revendications précédentes, **caractérisé en ce que** la pression exercée sur la zone de jonction par ladite lame de pression (2) est ajustée par des vis de réglage (6).

8. Dispositif selon les revendications précédentes, **caractérisé en ce qu'**il est particulièrement approprié pour joindre des feuilles fines constituées d'un alliage palladium-argent ayant une épaisseur inférieure à 50 $\mu$m.

9. Procédé pour joindre des feuilles fines constituées d'alliages métalliques sélectivement perméables à l'hydrogène, en particulier pour des dispositifs à membrane, **caractérisé en ce qu'**il procure une technique de soudage par diffusion à chaud qui comprend les étapes suivantes :

   - placer les bords à joindre en recouvrement ;
   - tirer les bords à proximité l'un de l'autre et les serrer au moyen d'une lame de pression (2) capable de presser uniformément les bords de la/des feuille(s) (1, 1B) à joindre afin de les souder, sur toute leur longueur ;
   - exécuter un cycle thermique dans un four sous une atmosphère contrôlée, afin de prévenir toute oxydation des alliages métalliques et de prévenir toute modification de la composition des alliages, selon le cycle thermique qui suit :

      - vitesse de chauffage de 6°C/min jusque 720°C ;
      - vitesse de chauffage de 12°C/min jusque 1100°C ;
      - maintien à 1100°C pendant 1 heure ;
      - refroidissement naturel jusqu'à la température ambiante pendant environ trois heures.

10. Procédé selon la revendication précédente, **caractérisé en ce que** ladite atmosphère contrôlée est formée par un flux d'argon et d'hydrogène.

11. Procédé selon la revendication précédente, **caractérisé en ce que** ledit flux a un débit de 1 litre/min d'un mélange d'argon (Ar) et de 5 % d'hydrogène (H) à la pression de 1 atm.

**12.** Procédé selon l'une quelconque des revendications 9 à 11, **caractérisé en ce que** lesdits alliages métalliques sélectivement perméables à l'hydrogène contiennent de l'argent.

FIG. 1

FIG. 2

FIG. 3

FIG. 5

FIG. 4

EP 1 184 125 B1

FIG. 6

FIG. 7

FIG. 8

FIG. 9

**EP 1 184 125 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Internal journal of hydrogen energy. Elsevier sciences Publishers, April 2000, 319-325

- **Dunkerton s.b.** *diffusion bonding-process and applications. Welding and metal Fabrication,* April 1991, 132, 134-136